(19) Europäisches Patentamt
European Patent Office
Office européen des brevets

(11) **EP 1 879 121 A2**

(12) **EUROPEAN PATENT APPLICATION**

(43) Date of publication:
**16.01.2008 Bulletin 2008/03**

(51) Int Cl.:
***G06F 17/50*** *(2006.01)*

(21) Application number: **07012196.7**

(22) Date of filing: **21.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.06.2006 JP 2006172180**

(71) Applicant: **Hitachi, Ltd.**
**Chiyoda-ku**
**Tokyo 100-8280 (JP)**

(72) Inventors:
• **Shimoda, Atsushi**
**Chiyoda-ku,**
**Tokyo 100-8220 (JP)**
• **Adachi, Tetsuro**
**Chiyoda-ku,**
**Tokyo 100-8220 (JP)**

(74) Representative: **Strehl Schübel-Hopf & Partner**
**Maximilianstrasse 54**
**80538 München (DE)**

(54) **Design support device, program and method**

(57)     To provide a technology for simultaneously designing a plurality of products, and respectively evaluating each of the plurality of products thus designed, a module type constituting a product is specified, modules included in the module type are, specified based on an attribute table storage area, candidate products are created by combining the modules thus specified, parameters corresponding to modules included in the candidate products are specified based on the parameter file storage area, an index for each of the candidate products is obtained by using the parameters thus specified, and the index thus obtained is displayed on a display unit.

## FIG. 1

**Description**

Background of the Invention

The present invention relates to a technology for supporting designing of a product which is constructed by combining a plurality of modules together.

As regards the technology for supporting designing of a product, there is known a technology disclosed in Japanese Patent Laid-open Publication No. 2003-99586 (hereinafter, referred to as Patent Document 1).

In the technology disclosed in Patent Document 1, information on modules which constitute an existingproduct is stored in a database, the modules satisfying target performances input by an operator are retrieved, and results of retrieval are output, to thereby support the designing of the product.

In recent years, market needs for products have been diversified. In consideration of the diversification of the market needs, it is becoming important to design a plurality of products satisfying the different market needs. However, with the technology disclosed in Patent Document 1, it is merely possible to support the designing of a single product, and it is impossible to simultaneously design the plurality of products and evaluate each of the plurality of products thus designed.

Summary of the Invention

It is an object of the present invention to provide a technology capable of simultaneously designing a.plurality of products and of respectively evaluating each of the plurality of products thus designed.

In order to attain the above-mentioned object, in a design support device according to the present invention, information on types of modules constituting a product, and information specifying the type of each module and a parameter thereof to be included in each type of the modules are stored, and if the module type constituting the product is specified based on the information, a candidate product may be created by combining the modules corresponding to the specified module type, and may determine by calculation an index for evaluating the created candidate product by using the parameter corresponding to the modules constituting the candidate product.

For example, the present invention provides a design support device which supports designing of a product constructed by combining a plurality of modules, including:

a storage unit which stores attribute information specifying, for each of the modules, a type to which the module belongs and a parameter for calculating, for each of the modules, an index obtained by combining the module;
an input unit which receives input of a type of module constituting a product to be designed; and
a control unit which creates candidate products by specifying modules which belong to the type of module input through the input unit based on the attribute information and combining the modules thus specified, specifies, based on the parameter information, parameters corresponding to the modules included in the candidate products, calculates a predetermined index expression by using the parameters thus specified, to thereby calculate a predetermined index for each candidate product.

As described above, according to the present invention, a module type which constitutes a product is specified, to thereby calculate, based on the parameter, a combination of modules corresponding to the module type and an index obtained by the combination, which makes it possible to respectively evaluate each of a plurality of products simultaneously designed, with reference to the index thus calculated.

Brief Description of the Drawings

In the accompanying drawings:

FIG. 1 is a schematic diagram of a design support device (100);
FIG. 2 is a schematic diagram of a constraint information table (111a);
FIG. 3 is a schematic diagram of a parameter table (112a);
FIG. 4 is a schematic diagram of a module type table (113a) ;
FIG. 5 is a schematic diagram of an attribute table (116a);
FIG. 6 is a schematic diagram of an old product table (117a);
FIG. 7 is a schematic diagram of a competitor's product table (117d) ;
FIG. 8 is a schematic diagram of an attribute information input screen (160);
FIG. 9 is a schematic diagram of a module information input screen (161);
FIG. 10 is a schematic diagram which shows a display example of a coordinate screen (162);

FIG. 11 is a schematic diagram which shows a display example of another coordinate screen (163);

FIG. 12 is a schematic diagram which shows a display example of a module configuration display screen (164);

FIG. 13 is a schematic diagram which shows a display example of an optimal candidate product display screen (165);

FIG. 14 is a flowchart which illustrates a process of creating an attribute table and storing the attribute table in an attribute table storage area (116);

FIG. 15 is a flowchart which illustrates a process of outputting a module configuration of a candidate product;

FIG. 16 is a flowchart which illustrates a process of specifying a module type and a parameter for attaining a designated product index; and

FIG. 17 is a flowchart which illustrates a process of identifying an optimal candidate product in which consideration is given to an intention of a user.

<u>Detailed Description of the Preferred Embodiment</u>

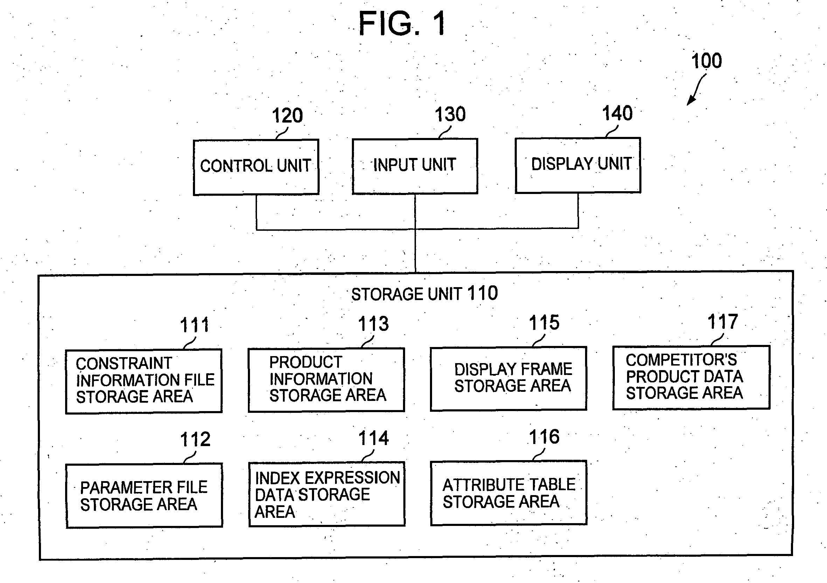

FIG. 1 is a schematic diagram of a design support device 100 according to an embodiment of the present invention.

This embodiment is described based on an exemplary case of designing an optical pattern inspection system; however, the present invention is not limited thereto. The optical pattern inspection system is configured by including one each of the modules of a light source, an optical system, an object lens, an image sensor, a stage, an image processing device, and an overall control device, which are combined.

The design support device 100 includes, as shown in FIG. 1, a storage unit 110, a control unit 120, an input unit 130, and a display unit 140.

The storage unit 110 includes a constraint information file storage area 111, a parameter file storage area 112, a product information storage area 113, an index expression data storage area 114, a display frame storage area 115, an attribute table storage area 116, and a competitor's product data storage area 117.

The constraint information file storage area 111 stores information for specifying a combination of modules which cannot be combined due to a technical reason or an empirical reason.

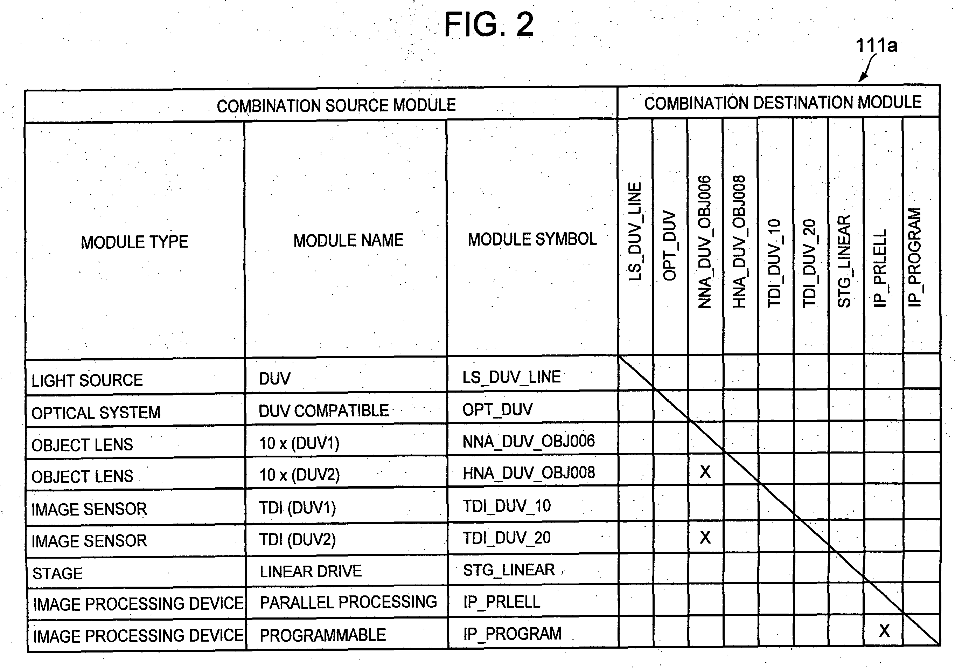

For example, the constraint information file storage area 111 stores a constraint information file which has a constraint information table 111a shown in FIG. 2.

The constraint information table 111a includes matrix data, in which modules of an original combination are specified in rows and modules of a target combination are specified in columns as shown in the drawing. In the constraint information table 111a, it is possible to specify a combination of modules which cannot be combined by registering an identification symbol "x" at the intersection of a row and column. In FIG. 2, the module of the original combination is identified by module type, module name, and module symbol, while the module of the target combination is identified by a module symbol, for the purpose of making it easy to conduct search. However, the present invention is not limited to the above-mentioried ,embodiment, and the module of the original combination and the module of the target combination may be identified in any way as long as each of the module of the original combination and the module of the target combination can be uniquely identified.

The parameter file storage area 112 stores parameters for each module, the parameter being used for calculating an index by using an index expression described later.

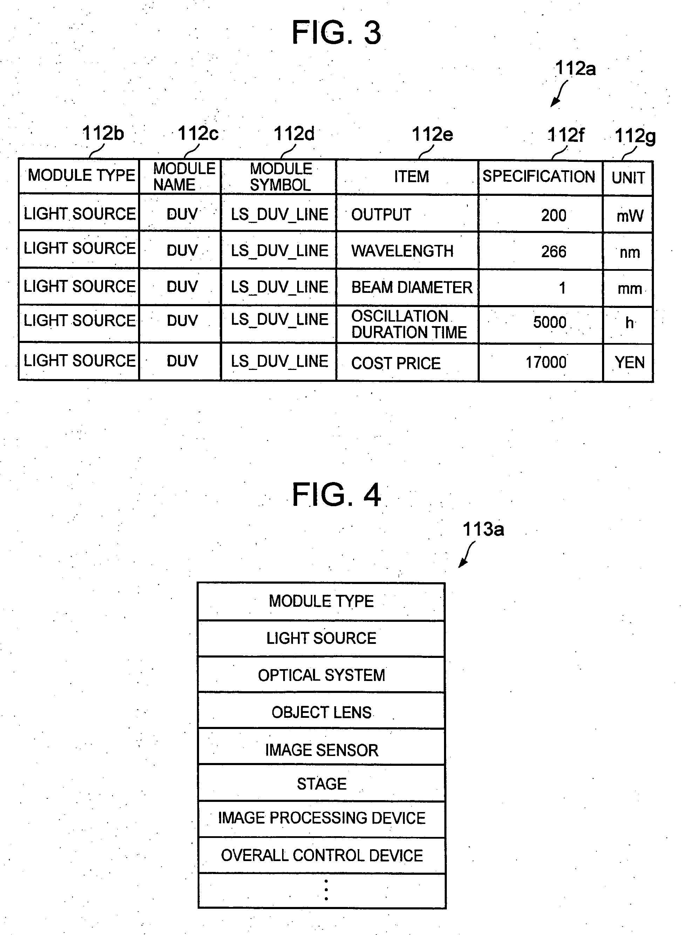

For example, the parameter file storage area 112 stores, for each module, a parameter table 112a shown in FIG. 3. As shown in the drawing, the parameter table 112a has a module type field 112b, a module name field 112c, a module symbol field 112d, an item field 112e, a specification field 112f, and a unit field 112g.

Registered in the module type field 112b is a module type, which corresponds to a module type, to which a module having a parameter specified by the table 112a, belongs.

Registered in the module name field 112c is a name of a module having a parameter specified by the table 112a.

Registered in the module symbol 112d is a module symbol for uniquely identifying a module having a parameter specified by the table 112a.

Registered in the item field 112e is an item name which corresponds to a type of a parameter to be specified. According to this embodiment, parameters for a light source module type include output, wavelength, beam diameter, oscillation duration time, and cost price. Modules each have different categories (items) for the parameters depending on the module type thereof, according to the index expression that is calculated.

Registered in the specification field 112f is a parameter which corresponds to a variable associated with an item specified by the information included in the item field 112e.

Registered in the unit field 112g is a unit of a parameter specified by the information included in the specification field 112f .

Above, a description has been given of an exemplary case where a module is defined by a "light source" module type. The parameter table 112a described above is created as necessary for each module type, and is stored in the parameter file storage area 112.

The product information storage area 113 stores information for specifying a module type which is expected to constitute a target product to be supported in design.

For example, the product information storage area 113 stores, as shown in FIG. 4, a module type table 113a which stores, for each product, module types which are expected to constitute the product.

The index expression storage area 114 stores an index expression for calculating a product index which can be specified by combining the modules.

In this case, the product index is calculated by using a parameter specified for each module, which serves as an index for making an evaluation of some kind on a candidate product which is configured by including modules combined. An index expression is described later in detail.

The display frame storage area 115 stores image data to be displayed on the display unit 140 described later. The control unit 120 described later reads the image data from the display frame storage area 115 as necessary, and performs necessary modification and integration, to thereby display the desired image on the display unit 140.

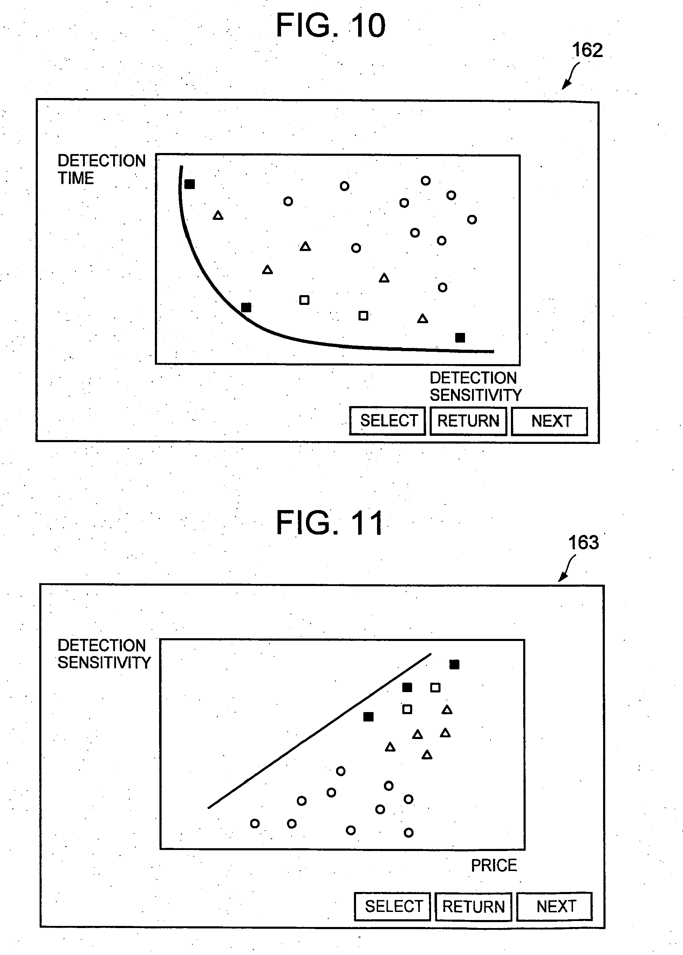

The display frame storage area 115 stores link information in which a mark plotted on coordinate screens 162 and 163 (see FIGS. 10 and 11) described later is associated with information for identifying a module constituting a candidate product for which an index specified by the mark is calculated.

The attribute table storage area 116 stores information for specifying, for each module, a module type to which the module belongs, and an attribute for each module. Specifically, according to this embodiment, the attribute table storage area 116 stores information for specifying a module type constituting a product, information for specifying a modulebelonging to the module type; and information for specifying an attribute of each module.

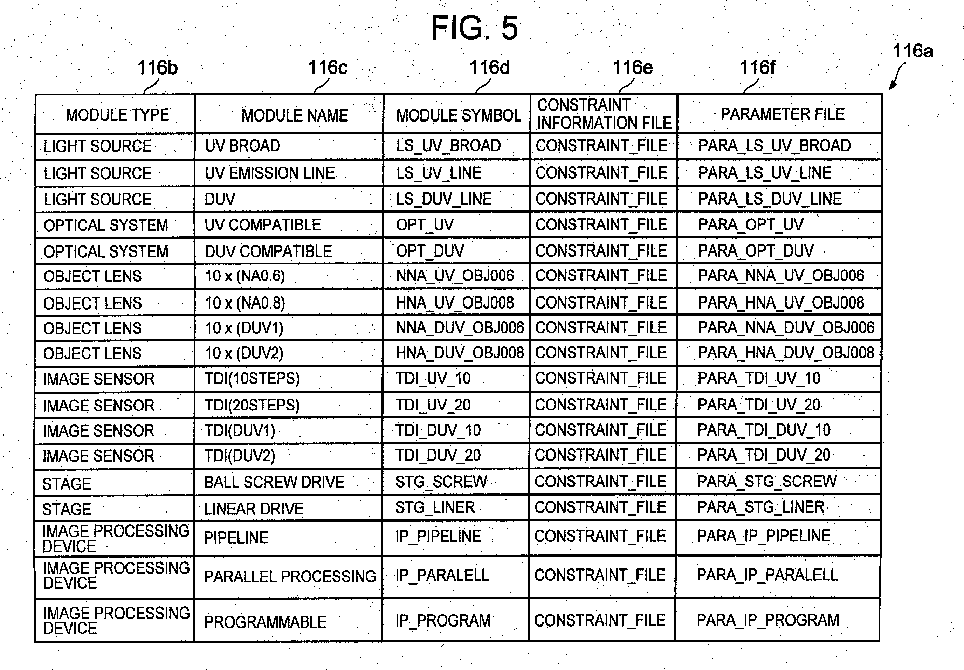

For example, the attribute table storage area 116 stores an attribute table 116a shown in FIG. 5.

The attribute table 116a has a module type field 11 6b, a module name field 116c, a module symbol field 116d, a constraint information file field 116e, and a parameter file field 116f.

Registered in the module type field 116b is a module type to which a module specified by a module name registered in the module name field 116c described later belongs.

Registered in the module name field 116c is a module name for specifying a module.

Registered in the module symbol field 116d is a module symbol which is identification information for uniquely identifying a module specified by the information included in the module name field 116c.

Registered in the constraint information file field 116e is a file name of a constraint information file having information for specifying another module which cannot be combined with the module specified by the information included in the module name field 116c.

Registered in the parameter file field 116f is a file name of a parameter file having information for specifying a parameter to be used for performing calculation, for each module specified by the information included in the module name field 116c, based on the index expression described later.

The competitor's product data storage area 117 stores information capable of specifying a product index of a competitor's product which is compared with a target product to be supported in design by the design support device 100.

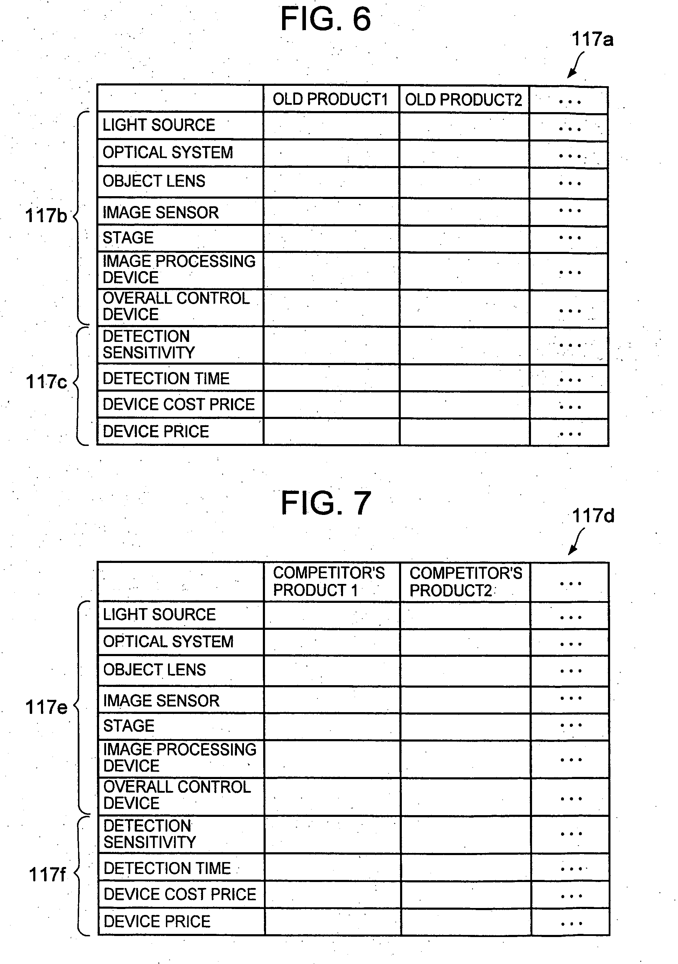

For example, the competitor's product data storage area 117 in this embodiment stores an old product table 117a shown in FIG. 6 and a competitor's product table 117d shown in FIG. 7. The old product table 117a stores information capable of specifying a product index of a current product or an old product which is to be supported in design. The competitor's product table 117d stores information capable of specifying a product index of a competitor's product competing with a product to be supported in design.

The old product table 117a includes a module specifying field 117b and a product index specifying field 117c. Information which can be compared with that of a product to be supported in design is input to one of the fields 117b and 117c, thereby making it possible to compare a product index of an old product and a product index of a target product to be supported in design.

Specifically, a module having a parameter specified by the information included in the attribute table 116a is specified by the information included in the module specifying field 117b, thereby making it possible to calculate a product index based on an index expression stored in an index expression storage area 114.

Alternatively, in a case where the module as described above cannot be specified, it is possible to register in the product index specifying field 117c a value of a product index to be compared with a product index of a target product to be supported in design.

The competitor' s product table 117d similarly includes a module specifying field 117e and a product index specifying field 117f. Information which can be compared with that of a product to be supported in design is input to one of the fields 117e and 117f, thereby making it possible to compare a product index of a competitor' s product and a product index of a target product to be supported in design.

The control unit 120 first receives, for each module type registered in the module type table 113a stored in the product information storage area 113, an input of information for specifying an attribute of a module belonging to the module type, through the input unit 130 and the display unit 140, and registers the information thus input in the attribute table storage area 116.

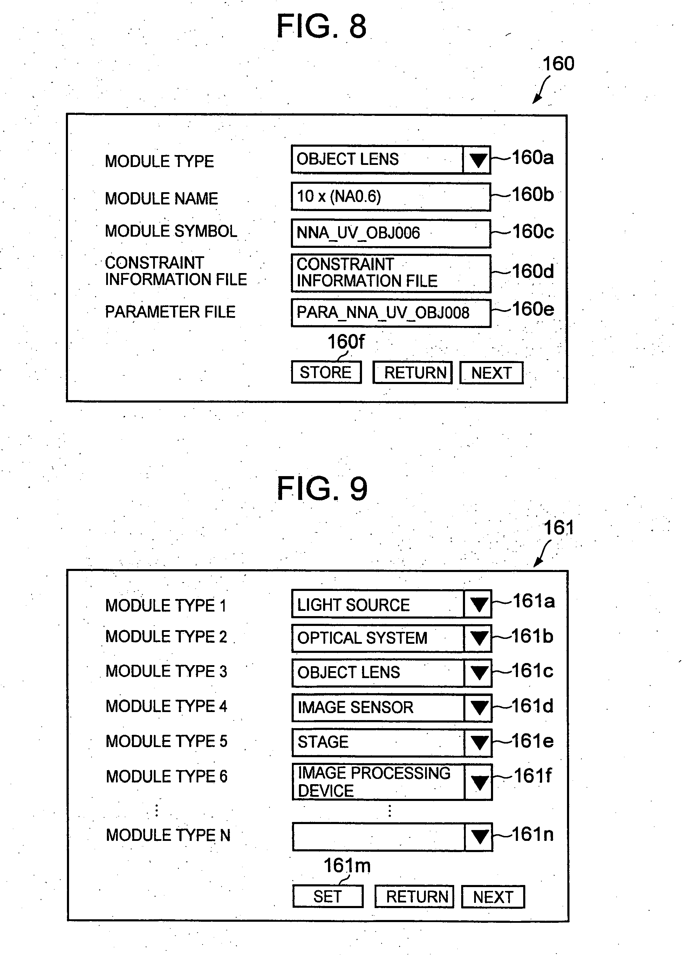

For example, the control unit 120 extracts, from the display frame storage area 115, image data of an attribute information input screen 160 shown in FIG. 8, displays the image data thus extracted on the display unit 140, and receives an input of information needed by an operator of the design support device 100.

The attribute information input screen 160 has a module type input field 160a, a module name input field 160b, a module symbol input field 160c, a constraint information file input field 160d, and a parameter file input field 160e.

Received through the module type input field 160a is an input of a module type to which a module having an attribute to be specified belongs. According to this embodiment, in this case, a module type to be input is selected from a pull-down menu of the module types registered in the module type table 113a

Received through the module name input field 160b is an input of a name of a module having an attribute to be specified.

Received through the module symbol input field 160c is an input of a module symbol, which is identification information of a module having an attribute to be specified.

Received through the constraint information file input field 160d is an input of a file name of a constraint information file which stores constraint information on a module having an attribute to be specified.

Received through the parameter file input field 160e is an input of a file name of a parameter file which stores a parameter table of a module having an attribute to be specified.

The control unit 120, upon receiving an execution instruction which is given by designating a storage button 160f in an attribute information input screen 160 through the input unit 130, registers information input through the attribute information input screen 160, in the attribute table 160a.

Next, the control unit 120 receives an input of information specifying a module type constituting a product to be supported in design, create candidate products by combining modules belonging to the module type thus inputted, and calculates a product index for each candidate product.

For example, the control unit 120 extracts, from the display frame storage area 115, image data of a module information input screen 161 shown in FIG. 9, displays the image data thus extracted on the display unit 140, and receives an input of information needed by an operator of the design support device 100.

As shown in FIG. 9, the module information input screen 161 includes a module type 1 input field 161a to a module type N (N is a natural number equal to or larger than 1) input field 161n, and a module type for constituting a product is specified in each of the input fields 161a to 161n.

According to this embodiment, the module types registered in the module type table 113a are listed in pull-down menu form, from which a module type is selected. The value of N is a design matter, which may be appropriately selected within a range capable of specifying a module necessary for the designing of a product, and may preferably be set to a number equal to the number of the module types registered in the module type table 113a.

Further, in a case where, a single product uses a plurality of the same modules, a plurality of the same module types are selected in the module information input screen 161.

Then, the control unit 120 creates candidate products by combining one each of the modules belonging to the module type specified through the module information input screen 161. In this case, with reference to the constraint information file stored in the constraint information file storage area 111, the control unit 120 excludes, from the candidate products, a product having a combination of modules which cannot be combined.

Further, the control unit 120 calculates an index expression stored in the index expression data storage area 114 by using a parameter specified by each one of the modules constituting the candidate products thus created, to thereby obtain a product index of each of the candidate products.

In the abovementibned case, the product indices, such as detection sensitivity, detection time, device cost price, and device price, are calculated, since in this embodiment design of an optical pattern inspection system is supported. However, the indices are not limited to the above-mentioned items.

The detection sensitivity is calculated based on the following expression (1).

Expression 1

$$\text{DETECTION SENSITIVITY} = \frac{P}{M} \ldots (1)$$

In the expression, P refers to pixel size of the image sensor, which is registered in the parameter table of the image sensor. M refers to magnification factor, which is obtained as a product of magnifying power of the object lens and magnifying power of the imaging lens. The magnifying power of the object lens is registered in the parameter table of the object lens and the magnifying power of the imaging lens is registered in the parameter table of the optical system.

Note that the lower limit of the detection sensitivity is constrained by the resolution power of the object lens which is indicated by the following expression (2).

Expression 2

$$\text{RESOLUTION POWER} = \frac{K \times \lambda}{NA} \ldots (2)$$

In the expression, K is a coefficient, which is defined as 0.61 based on the Rayleigh criterion. Also, $\lambda$ refers to an illumination wavelength and NA refers to the numeric aperture of the object lens. $\lambda$ is registered in the parameter table of the light source and NA is registered in the parameter table of the object lens.

The detection time is calculated based on the following expression (3).

Expression 3

$$\text{DETECTION TIME} = \frac{S}{W \times V} \ldots (3)$$

In the expression, S refers to an area to be detected, W refers to an imaging width on a sample surface, and V refers to an imaging speed on the sample surface.

The value for S is defined by a predetermined unit area, and the values for W and V are each obtained by the following expressions (4) and (5), respectively.

Expression 4

$$W = \frac{W_o}{M} \ldots (4)$$

Expression 5

$$V = \frac{P}{M \times \Delta T} \ldots (5)$$

In the expressions, $W_o$ refers to the width of the image sensor, which is registered in the parameter table of the image sensor. M refers to the magnification factor similarly to the above. Further, $\Delta T$ refers to time necessary for the migration of electric charge between pixels, which is registered in the parameter table of the image sensor.

Expressions (4) and (5) are substituted into Expression (3) and the terms are rearranged, to thereby obtain Expression (6).

Expression 6

$$\text{DETECTION TIME} = \left(\frac{S \times \Delta T}{W_0 \times P}\right) \times M^2 \quad \cdots (6)$$

Further, Expression (6) is substituted into Expression (1) to eliminate M, to thereby obtain the following expression (7).

Expression 7

$$\text{DETECTION TIME} = \frac{S \times \Delta T}{W \times (\text{DETECTION SENSITIVITY})} \quad \cdots (7)$$

Accordingly, based on Expression (7), it is understood that there is a trade-off relation between the detection time and the detection sensitivity.

Also, the product cost price is obtained as a total sum of the cost prices of the modules which are combined to produce the product. The cost prices of the modules are registered in the parameter tables of the modules.

Further, the product price is obtained by the following expression (8), in which a profit value is obtained by multiplying the product cost price by a predetermined profit rate and the profit value is added to the product cost price.

Expression 8

$$\text{PRODUCT PRICE} = \text{PRODUCT COST PRICE} (1 + \text{PROFIT RATE}) \cdots (8)$$

The control unit 120 performs a process of displaying, on the display unit 140 described later, candidate products each having the product index obtained as described above, by plotting the candidate products on coordinates, with axes indicating predetermined product indices. The control unit 120 also performs a process of calculating, in a case where the competitor's product data storage area 117 stores data of an old product or of a competitor's product, a product index for the old product or the competitor's product, and displaying the old product or the competitor's product on the display unit 140 described later by plotting the product index of the old product or the competitor's product on a coordinate together with the product index of the candidate products.

For example, the control unit 120 plots the candidate products (displayed as "□" or "■" in FIG. 10), the old products (displayed- as "Δ" in FIG. 10), and the competitor's products.(displayed as "O" in FIG. 10) using coordinates, with detection time on the vertical axis and detection sensitivity on the horizontal axis, as shown in FIG. 10 (a display example of the coordinate screen 162).

The control unit 120 also plots the candidate products (displayed as "□" or "■" in FIG. 11), the old products (displayed as "Δ" in FIG. 11), and the competitor's products (displayed as "O" in FIG. 11) using coordinates, with detection sensitivity on the vertical axis and product price on the horizontal axis, as shown in FIG. 11 (a display example of the coordinate screen 163).

The control unit 120 further performs a process of displaying, on the display unit 140 described later, names of modules constituting a candidate.product selected from among the modules combined to produce the candidate products.

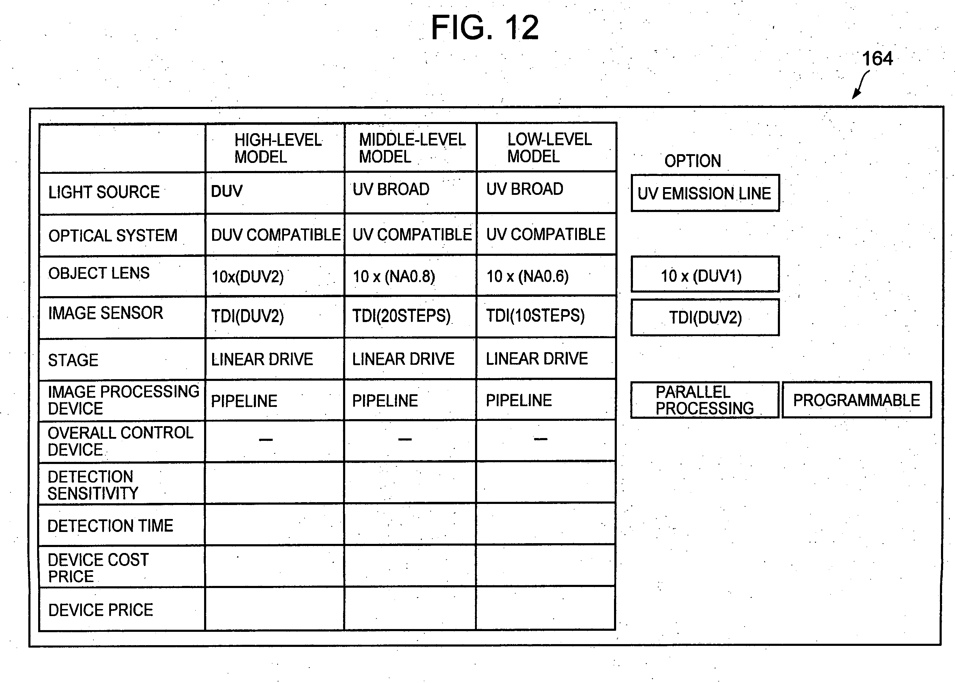

For example, as shown in FIGS. 10 and 11, the candidate products displayed as "□" are distinctly specified as high-level product, middle-level product, or low-level product through the input unit 130 (the candidate products thus specified are displayed as "■") to thereby create a list shown in FIG. 12 (a display example of a module configuration display screen 164), in which each of the candidate products thus specified has names of modules constituting the candidate product and the index obtained by the combination of the modules specified, and display the list on the display unit 140. In FIG. 12, module names of modules which are not selected either for the high-level product, the middle-level product, or the low-level product are displayed as options.

Also, in a case where a product index is specified by an operator of the design support device 100 through the input unit 130 and the display unit 140, the control unit 120 performs a process of specifying a module type and a parameter relating to the product index thus specified.

For example, the operator of the design support device 100 designates a point other than the points which have already been plotted on the coordinate screen 162 of FIG. 10 or on the coordinate screen 163 of FIG. 11, that is, the operator designates a point other than the points indicating the candidate products, the old products, and the competitor's products, and gives an execution instruction to the control unit 120, to specify, based on an index expression stored in the index expression data storage area 114, a parameter item necessary for calculating the product indices indicated by the coordinate axes and to specify, based on the parameter table 112a stored in the parameter file storage area 112, a module type having the parameter item thus specified.

The parameter item and the module type specified as described above are displayed on the display unit 140 in a predetermined display style in which, for example, the parameter item thus specified and a module type having the item are displayed in parallel.

Further, the control unit 120 performs a process of specifying a candidate product to be selected in which consideration is given to an intention of a user.

For example, in the display screen of FIG. 11, the vertical axis indicates a product index of detection sensitivity and the horizontal axis indicates a product index of price. In FIG. 11, an effect line which is inclined at a predetermined angle is defined, which indicates, by the inclination of the effect line, which one of the detection sensitivity and the price is of more concern to a consumer in making a decision about which product to select. In other words, the effect line of a consumer who is more interested in the detection sensitivity than in the price, is inclined at a smaller angle (so as to come close to being perpendicular to the vertical axis), the effect line of a consumer who is evenly interested in both the detection sensitivity and the price, is inclined at an angle of around 45 degrees, and the effect line of a consumer who is more interested in the price than in the detection sensitivity, is inclined at a greater angle (so as to come close to being parallel to the vertical axis).

Also, in FIG. 11, the verticalaxis indicates a product index of detection sensitivity and the horizontal axis indicates a product index of price, and it can be assumed that a consumer generally selects a product which is low in price and high in detection sensitivity (high in performance). Accordingly, in FIG. 11, it is considered that there is a first point satisfying the intention of a user, with upper left coordinates, and there is a second point not satisfying the intention of a user, with lower right coordinates.

Accordingly, effect lines are defined which are inclined at predetermined angles in a range of 0 to 90 degrees to the vertical axis, and by extracting a first candidate product in contact with one of the effect lines when the lines are moved in parallel from the upper left side to the lower right side of FIG. 11, an optimal candidate product for each effect line can be specified.

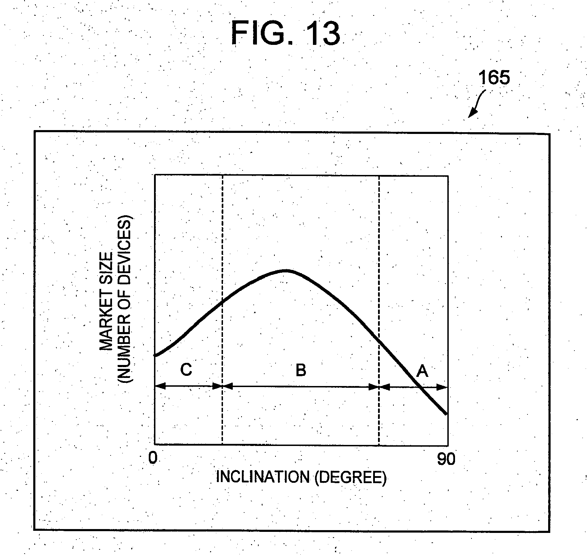

The optimal candidate product calculated as described above may be displayed using coordinates, with the vertical axis indicating the inclination of the effect line and the horizontal axis indicating a market size, as shown in FIG. 13 (a display example of an optimal candidate product display screen 165), together with a curved line indicating market size, thereby making it possible to select a candidate product with consideration given to the market size.

The input unit 130 includes an input device such as a keyboard or a mouse.

The display unit 140 includes a display device such as a display.

It is possible to attain the design support device 100 as described above by what is termed a computer. For example, the storage unit 110 may be realized by an external storage device such as a hard disk drive, and the control unit 120 may be realized by a predetermined program stored in the external storage device such as a hard disk drive, and executed by a central processing unit (CPU).

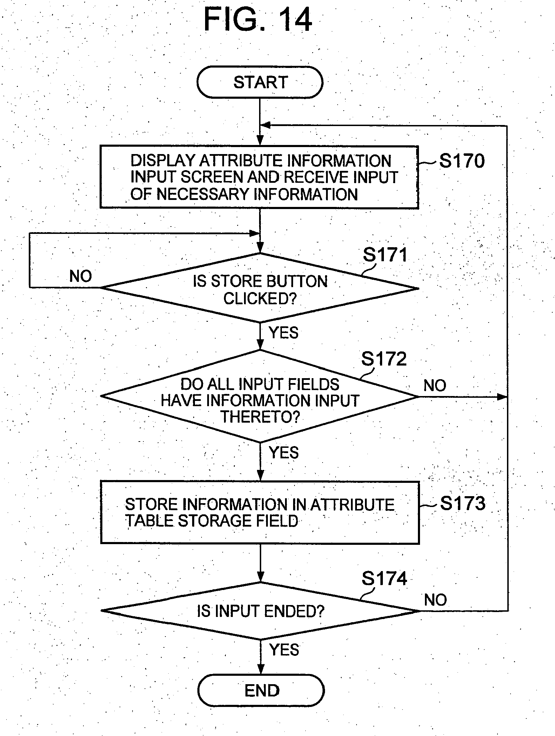

With reference to a flowchart shown in FIG. 14, a description is given of a process of creating an attribute table and storing the attribute table in the attribute table storage area 116 in the design support device 100 configured as described above.

First, the control unit 120 extracts necessary data from the display frame storage area 115 and the product information storage area 113, and displays the attribute information input screen 160 shown in FIG. 8 on the display unit 140, to thereby receive an input of information needed by an operator of the design support device 100 (S170).

In a case where the control unit 120 receives an execution instruction which has been given by an operator of the design support device 100 designating the storage button 160f, through the input unit 130 (S171), the control unit 120 checks to see whether all the input fields of the attribute information input screen 160 have information input thereto (S172), and in a case where all the input fields have information input thereto (S172), the information is registered in the attribute table 116a stored in the attribute table storage area 116 (S173).

The processes in Step 5170 to Step 5173 are repeatedly performed until the operator of the design support device 100 gives an instruction to the control unit 120 to terminate the processes, through the input unit 130 and the display unit 140 (S174).

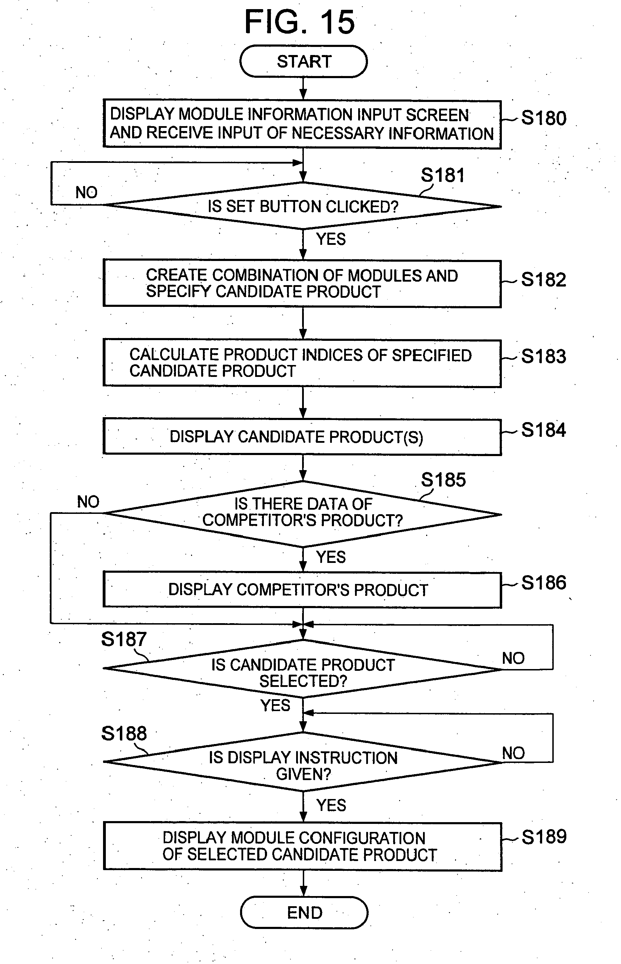

FIG. 15 is a flowchart which illustrates a process of outputting a module configuration of a candidate product.

First, the control unit 120 extracts necessary data from the display frame storage area 115 and the product information storage area 113, and displays the module information input screen 161 shown in FIG. 9 on the display unit 140, to thereby receive an input of information needed by an operator of the design support device 100 (S180).

Then, in a case where the control unit 120 receives an execution instruction which has been given by an operator of the design support device 100 designating of a setting button 161m through the input unit 130 (S181), the control unit 120 excludes, from the combinations of all the modules belonging to a module type specified through the module information input screen 161, a combination of modules which cannot be combined, with reference to the constraint information file stored in the constraint information file storage area 111, to thereby specify candidate products (S182).

Further, the control unit 120 specifies a parameter in the parameter file storage area 112 of a module constituting each candidate product created as described above, and calculates an index expression stored in the index expression data storage area 114, to thereby calculate a product index for each candidate product (S183).

The control unit 120 plots positions corresponding to the candidate products on the coordinate with the axes indicating predetermined product indices, and displays the positions in a predetermined display style (S184). For example, according to this embodiment, the candidate products are displayed as "□" or "■" on the coordinate as shown in FIG. 10 or FIG. 11.

Also, in a case where the competitor's product data storage area 117 stores data of an old product or of a competitor's product (5185), the control unit 120 plots the positions corresponding thereto on the coordinate and displays the positions in a predetermined display style (S186). For example, according to this embodiment, the oldproducts are displayed as "∆" and the competitor' s products are displayed as "O" as shown in FIG. 10 or FIG. 11.

After that, the control unit 120 receives, through the input unit 130 and the display unit 140, a selection of candidate products made by an operator of the design support device 100 (S187), and in a case where an instruction to display a module configuration is received (S188); the control unit 120 displays the module configurations of the selected candidate products in a predetermined display style on the display unit 140 (S189).

According to this embodiment, a candidate product is selected by specifying whether the candidate product is a high-level model, middle-level model, or low-level model, and the selection thus made is received in Step S187, which makes it possible to display a module configuration respectively for high-level model, middle-level model, and low-level model candidate products, for example, as shown in FIG. 12.

In this case, it is possible to define whether the candidate product is of a high-level model, middle-level model, or low-level model by, for example, requesting the operator to select a candidate product by specifying whether the candidate product is of a high-level model, middle-level model, or low-level model through the input unit 130 or the display unit 140.

In the above-mentioned embodiment, three categories of high-level model, middle-level model, and low-level model are provided to be selected for a candidate product; however, the present invention is not limited thereto, and more than three categories or less than three categories may be provided for the models to be selected.

Further, as shown in FIG. 12, it is possible to display the product index together with the module configuration, and it is also possible to display, as an option, a module which has not been selected for a candidate product.

As described above, according to this embodiment, it is possible to understand, by predetermined coordinates, the product indices for each candidate product configured by combining modules. Accordingly, with reference to the coordinate screen 162 of FIG. 10, it is possible to sequentially display module configurations in decreasing order of the price-to-performance ratio, to thereby make the information useful in designing a product.

Alternatively, as shown in FIGS. 10 and 11, it is easy to make a comparison with an old product, and therefore, it is possible to display a module configuration of a candidate product which is highly evaluated as compared with the old product in terms of a product index, to thereby make the information useful in designing a product, and it is also possible to display a module configuration of a candidate product which has a price-to-performance ratio higher than that of the old product, thus making the information useful in designing a product.

Further, according to this embodiment, it is possible to identify the indices of a plurality of candidate products using the coordinates, and therefore it is possible to combine modules such that the price-to-performance ratios for a high-level model, a middle-level model, and a low-level model are dispersed in a balanced manner, that is, the indices indicating the price and the performance are dispersed at regular intervals among those models.

With the coordinates shown in FIG. 10 or FIG. 11, a lower limit or an upper limit of the indices may be specified, to thereby make it possible not to display a candidate product with an index which does not fall within the lower limit or the upper limit.

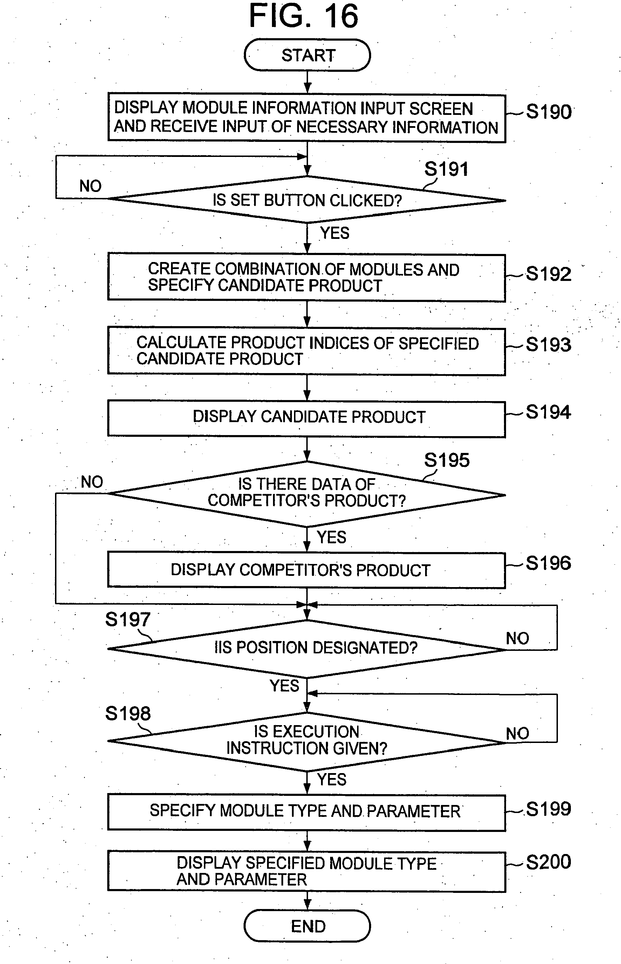

FIG. 16 is a flowchart which illustrates a process of specifying a module type and a parameter for attaining a designated product index.

In FIG. 16, Steps S190 to S196 are similar to Steps S180 to S186 shown in FIG. 15, and the description thereof is omitted accordingly.

In the display screen displayed in the display unit 140, the control unit 120 receives the designation of positions other than the positions of the candidate products, the old products, or the competitor' s products, from an operator of the design support device 100 through the input unit 130 (S197), and receives an execution instruction (S198), to thereby specify, based on an index expression stored in the index expression data storage area 114, the parameter item necessary for calculating a product index corresponding to the designated position, and specify a module type haying the parameter item thus specified, based on the parameter table 112a stored in the parameter file storage area 112 (S199).

Then, the parameter item and the module type specified as described above are displayed in a predetermined display style on the display unit 140 (5200) .

As described above, according to this embodiment, the product index of a product to be designed is specified using the coordinates, so as to specify a module type necessary for improvement and modification in order to attain the product index, and a parameter of the module type, which makes it possible to easily comprehend items that have to be improved or modified in order to design the product.

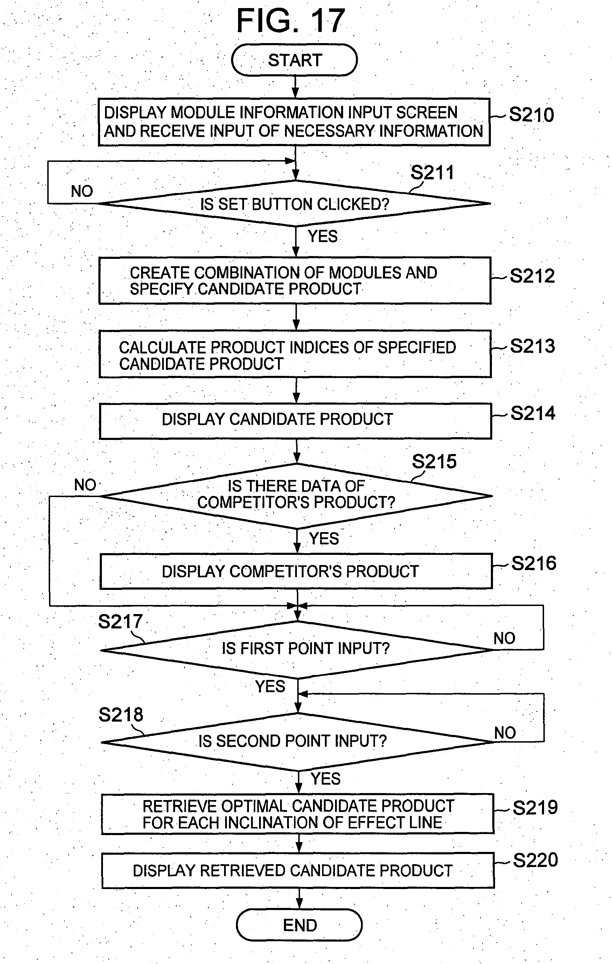

FIG. 17 is a flowchart which illustrates a process of identifying an optimal candidate product in which consideration is given to an intention of a user.

In FIG. 17, Steps S210 to S216 are similar to Steps S180 to S186 shown in FIG. 15, and the description thereof is omitted accordingly.

In the display screen displayed in the display unit 140, the control unit 120 receives an input, from an operator of the design support device 100, of a first point using the coordinates, through the input unit 130 (S217), and receives an input of a second point using the coordinates (S218).

For example, as shown in FIG. 10, in a case where the vertical axis indicates detection time (performance) and the horizontal axis indicates detection sensitivity (performance), a point located on the lower left may be defined as the first point and a point located on the upper left may be defined as the second point using the coordinates of FIG. 10, because it can be assumed that a consumer generally selects a product which has a short detection time and is high in detection sensitivity.

In this case, a point designating a detection time shorter than any other detection times calculated for the candidate products and a detection sensitivity higher than any other detection sensitivities calculated for the candidate products is selected as the first point; and a point designating a detection time longer than any other detection times calculated for the candidate products and a detection sensitivity lower than any other detection sensitivities calculated for the candidate products is selected as the second point, to thereby include all the candidate products as targets to be retrieved in Step S219 described later.

Also, as shown in FIG. 11, in a case where the vertical axis indicates detection sensitivity (performance) and the horizontal axis indicates price, a point located on the upper left may be defined as the first point and a point located on the lower right may be defined as the second point on the coordinate of FIG. 11, because it can be assumed that a consumer generally selects a product which is low in price and high in detection sensitivity (high in performance).

In this case, a point designating a detection sensitivity higher than any other detection sensitivities calculated for the candidate products and a price lower than any other prices calculated for the candidate products is selected as the first point, and a point designating a detection sensitivity lower than any other detection sensitivities calculated for the candidate products and a price higher than any other prices calculated for the candidate products is selected as the second point, to thereby include all the candidate products as targets to be retrieved in Step 5219 described later.

The control unit 120 retrieves optimal candidate products for the respective effect lines of different inclinations (S219). Specifically, an optimal candidate product is selected for each of the effect lines of different inclinations in such a manner that a first the candidate product in contact with one of the effect lines having different inclinations when the effect lines are each moved from a position passing through the first point, toward a position passing through the second point, is defined as an optimal candidate product for the effect line.

The candidate products thus retrieved are displayed in a predetermined display style on the display unit 140 (S220). For example, as shown in FIG. 13, optimal candidate products for the respective effect lines of different inclinations may be displayed together with market sizes (the number of devices) for the respective effect lines of different inclinations on the same coordinate. Data to be displayed together with the optimal candidate products may be stored in the display frame storage area 115 of the storage unit 110 in advance.

According to this embodiment, optimal candidates are retrieved for the respective effect lines of different inclinations; however, the target to be retrieved is not limited to a candidate product, and an old product or a competitor' s product may also be retrieved and displayed together in a predetermined display style, thereby making it possible to identify a consumer's intention (preferences) in which a candidate product is competitive over other candidate products.

As described above, according to this embodiment, it is possible to select an optimal candidate product with consideration given to a consumer's intention.

**Claims**

1. A design support device which supports designing of a product constructed by combining a plurality of modules the device comprising:

   a storage unit which stores attribute information specifying, for each of the modules, a type to which the module belongs and a parameter for calculating, for each of the modules, an index obtained when the module is combined;
   an input unit which receives input of a type of module constituting a product to be designed; and
   a control unit which creates candidate products by specifying, from the attribute information, modules which belong to the type of module inputted through the input unit, and combining the modules thus specified, specifies, from the parameter information, parameters corresponding to the modules included in the candidate products, and computes a predetermined index expression by using the parameters thus specified, to calculate a predetermined index for each candidate product.

2. A design support device according to claim 1, further comprising a display unit which is capable of displaying at least image data, wherein
   the control unit creates coordinate image data in which a coordinate position corresponding to the calculated index is marked, and displays the coordinate image data on the display unit.

3. A design support device according to claim 2, wherein
   the storage unit stores link information in which the marked position is linked with information specifying a module corresponding to a parameter from which an index specified by the marked position is calculated; and
   the control unit, upon receiving an execution instruction designating the marked position through the input unit, displays information specifying the module linked with the marked position thus designated, on the display unit.

4. A design support device according to claim 3, wherein the control unit, upon receiving an execution instruction designating a plurality of the marked positions through the input unit, displays a plurality of information items specifying the modules linked with the marked positions thus designated, on the display unit.

5. A design support device according to claim 2, wherein the control unit, upon receiving an execution instruction designating an arbitrary coordinate position in the coordinate image data through the input unit, displays a type of a parameter for calculating an index corresponding to the position thus designated and a type of a module corresponding to the type of the parameter, on the display unit.

6. A design support device according to claim 2, wherein the control unit identifies, as an optimal candidate product, a combination of the modules linked with the marked position which first hits a line, having a predetermined inclination, which is moved in parallel from a position passing through a first point to a position passing through a second point.

7. A design support device according to claim 6, wherein the first point is a point designating an index which is evaluated higher than any other index calculated for each of the candidate products, and the second point is a point designating an index which is evaluated lower than any other index calculated for each of the candidate products.

8. A design support device according to claim 6, wherein the control unit sets a plurality of the predetermined inclinations, and specifies, for each predetermined inclination, an optimal candidate product.

9. A design support device according to claim 1, wherein:

   the storage unit stores constraint information for specifying modules which cannot be combined; and
   the control unit creates the candidate products such that a combination of the modules, which the constraint information does not allow be combined, are not included.

10. A program which causes a computer to function as:

    storage means which stores attribute information specifying, for each of the modules, a type to which each of the modules belongs, and a parameter for calculating, for each of the modules, an index obtained when the module is combined with another module;
    input means which receives input of a type of module constituting a product to be designed; and

control means which creates candidate products by specifying, from the attribute information, modules which belong to the type of module inputted through the input unit, and combining the modules thus specified, specifies, from the parameter information, parameters corresponding to the modules included in the candidate products, and computes a predetermined index expression by using the parameters thus specified, to calculate the predetermined index for each candidate product.

11. A design support method which supports designing of a product constructed by combining a plurality of modules, the design support method being used in a design support device which includes a storage unit storing attribute information specifying a type to which each module belongs and a parameter for calculating, for each of the modules, an index obtained when the module is combined, an input unit, and a control unit, the design support method comprising the steps of:

receiving, by the input unit, input of a type of module constituting a product to be designed;
creating, by the control unit, candidate products by specifying modules which belong to the type of module inputted through the input unit, from the attribute information, and combining the modules thus specified; and
specifying, by the control unit, from the parameter information, parameters corresponding to the modules included in the candidate products, and calculating a predetermined index by using the parameters thus specified, to obtain a predetermined index for each candidate product.

# FIG. 1

100

| 120 | 130 | 140 |
|---|---|---|
| CONTROL UNIT | INPUT UNIT | DISPLAY UNIT |

STORAGE UNIT 110

| 111 | 113 | 115 | 117 |
|---|---|---|---|
| CONSTRAINT INFORMATION FILE STORAGE AREA | PRODUCT INFORMATION STORAGE AREA | DISPLAY FRAME STORAGE AREA | COMPETITOR'S PRODUCT DATA STORAGE AREA |

| 112 | 114 | 116 | |
|---|---|---|---|
| PARAMETER FILE STORAGE AREA | INDEX EXPRESSION DATA STORAGE AREA | ATTRIBUTE TABLE STORAGE AREA | |

EP 1 879 121 A2

## FIG. 2

111a

| Combination Source Module | | | Combination Destination Module | | | | | | | | |
|---|---|---|---|---|---|---|---|---|---|---|---|
| MODULE TYPE | MODULE NAME | MODULE SYMBOL | LS_DUV_LINE | OPT_DUV | NNA_DUV_OBJ006 | HNA_DUV_OBJ008 | TDI_DUV_10 | TDI_DUV_20 | STG_LINEAR | IP_PRLELL | IP_PROGRAM |
| LIGHT SOURCE | DUV | LS_DUV_LINE | | | | | | | | | |
| OPTICAL SYSTEM | DUV COMPATIBLE | OPT_DUV | | | | | | | | | |
| OBJECT LENS | 10 x (DUV1) | NNA_DUV_OBJ006 | | | | | X | | | | |
| OBJECT LENS | 10 x (DUV2) | HNA_DUV_OBJ008 | | | | | | X | | | |
| IMAGE SENSOR | TDI (DUV1) | TDI_DUV_10 | | | | | | | | | |
| IMAGE SENSOR | TDI (DUV2) | TDI_DUV_20 | | | | | | | | | |
| STAGE | LINEAR DRIVE | STG_LINEAR | | | | | | | | X | |
| IMAGE PROCESSING DEVICE | PARALLEL PROCESSING | IP_PRLELL | | | | | | | | | |
| IMAGE PROCESSING DEVICE | PROGRAMMABLE | IP_PROGRAM | | | | | | | | | |

# FIG. 3

112a

| MODULE TYPE | MODULE NAME | MODULE SYMBOL | ITEM | SPECIFICATION | UNIT |
|---|---|---|---|---|---|
| LIGHT SOURCE | DUV | LS_DUV_LINE | OUTPUT | 200 | mW |
| LIGHT SOURCE | DUV | LS_DUV_LINE | WAVELENGTH | 266 | nm |
| LIGHT SOURCE | DUV | LS_DUV_LINE | BEAM DIAMETER | 1 | mm |
| LIGHT SOURCE | DUV | LS_DUV_LINE | OSCILLATION DURATION TIME | 5000 | h |
| LIGHT SOURCE | DUV | LS_DUV_LINE | COST PRICE | 17000 | YEN |

112b 112c 112d 112e 112f 112g

# FIG. 4

113a

| MODULE TYPE |
|---|
| LIGHT SOURCE |
| OPTICAL SYSTEM |
| OBJECT LENS |
| IMAGE SENSOR |
| STAGE |
| IMAGE PROCESSING DEVICE |
| OVERALL CONTROL DEVICE |
| ⋮ |

## FIG. 5

| MODULE TYPE | MODULE NAME | MODULE SYMBOL | CONSTRAINT INFORMATION FILE | PARAMETER FILE |
|---|---|---|---|---|
| LIGHT SOURCE | UV BROAD | LS_UV_BROAD | CONSTRAINT_FILE | PARA_LS_UV_BROAD |
| LIGHT SOURCE | UV EMISSION LINE | LS_UV_LINE | CONSTRAINT_FILE | PARA_LS_UV_LINE |
| LIGHT SOURCE | DUV | LS_DUV_LINE | CONSTRAINT_FILE | PARA_LS_DUV_LINE |
| OPTICAL SYSTEM | UV COMPATIBLE | OPT_UV | CONSTRAINT_FILE | PARA_OPT_UV |
| OPTICAL SYSTEM | DUV COMPATIBLE | OPT_DUV | CONSTRAINT_FILE | PARA_OPT_DUV |
| OBJECT LENS | 10 x (NA0.6) | NNA_UV_OBJ006 | CONSTRAINT_FILE | PARA_NNA_UV_OBJ006 |
| OBJECT LENS | 10 x (NA0.8) | HNA_UV_OBJ008 | CONSTRAINT_FILE | PARA_HNA_UV_OBJ008 |
| OBJECT LENS | 10 x (DUV1) | NNA_DUV_OBJ006 | CONSTRAINT_FILE | PARA_NNA_DUV_OBJ006 |
| OBJECT LENS | 10 x (DUV2) | HNA_DUV_OBJ008 | CONSTRAINT_FILE | PARA_HNA_DUV_OBJ008 |
| IMAGE SENSOR | TDI(10STEPS) | TDI_UV_10 | CONSTRAINT_FILE | PARA_TDI_UV_10 |
| IMAGE SENSOR | TDI(20STEPS) | TDI_UV_20 | CONSTRAINT_FILE | PARA_TDI_UV_20 |
| IMAGE SENSOR | TDI(DUV1) | TDI_DUV_10 | CONSTRAINT_FILE | PARA_TDI_DUV_10 |
| IMAGE SENSOR | TDI(DUV2) | TDI_DUV_20 | CONSTRAINT_FILE | PARA_TDI_DUV_20 |
| STAGE | BALL SCREW DRIVE | STG_SCREW | CONSTRAINT_FILE | PARA_STG_SCREW |
| STAGE | LINEAR DRIVE | STG_LINER | CONSTRAINT_FILE | PARA_STG_LINER |
| IMAGE PROCESSING DEVICE | PIPELINE | IP_PIPELINE | CONSTRAINT_FILE | PARA_IP_PIPELINE |
| IMAGE PROCESSING DEVICE | PARALLEL PROCESSING | IP_PARALELL | CONSTRAINT_FILE | PARA_IP_PARALELL |
| IMAGE PROCESSING DEVICE | PROGRAMMABLE | IP_PROGRAM | CONSTRAINT_FILE | PARA_IP_PROGRAM |

116b 116c 116d 116e 116f 116a

EP 1 879 121 A2

# FIG. 6

117a

| | OLD PRODUCT1 | OLD PRODUCT2 | ... |
|---|---|---|---|
| LIGHT SOURCE | | | ... |
| OPTICAL SYSTEM | | | ... |
| OBJECT LENS | | | ... |
| IMAGE SENSOR | | | ... |
| STAGE | | | ... |
| IMAGE PROCESSING DEVICE | | | ... |
| OVERALL CONTROL DEVICE | | | ... |
| DETECTION SENSITIVITY | | | ... |
| DETECTION TIME | | | ... |
| DEVICE COST PRICE | | | ... |
| DEVICE PRICE | | | ... |

117b { (LIGHT SOURCE through OVERALL CONTROL DEVICE)
117c { (DETECTION SENSITIVITY through DEVICE PRICE)

# FIG. 7

117d

| | COMPETITOR'S PRODUCT 1 | COMPETITOR'S PRODUCT2 | ... |
|---|---|---|---|
| LIGHT SOURCE | | | ... |
| OPTICAL SYSTEM | | | ... |
| OBJECT LENS | | | ... |
| IMAGE SENSOR | | | ... |
| STAGE | | | ... |
| IMAGE PROCESSING DEVICE | | | ... |
| OVERALL CONTROL DEVICE | | | ... |
| DETECTION SENSITIVITY | | | ... |
| DETECTION TIME | | | ... |
| DEVICE COST PRICE | | | ... |
| DEVICE PRICE | | | ... |

117e { (LIGHT SOURCE through OVERALL CONTROL DEVICE)
117f { (DETECTION SENSITIVITY through DEVICE PRICE)

# FIG. 8

160

| | |
|---|---|
| MODULE TYPE | OBJECT LENS ▼ ~160a |
| MODULE NAME | 10 x (NA0.6) ~160b |
| MODULE SYMBOL | NNA_UV_OBJ006 ~160c |
| CONSTRAINT INFORMATION FILE | CONSTRAINT INFORMATION FILE ~160d |
| PARAMETER FILE | PARA_NNA_UV_OBJ008 ~160e |

160f

STORE   RETURN   NEXT

# FIG. 9

161

| | |
|---|---|
| MODULE TYPE 1 | LIGHT SOURCE ▼ ~161a |
| MODULE TYPE 2 | OPTICAL SYSTEM ▼ ~161b |
| MODULE TYPE 3 | OBJECT LENS ▼ ~161c |
| MODULE TYPE 4 | IMAGE SENSOR ▼ ~161d |
| MODULE TYPE 5 | STAGE ▼ ~161e |
| MODULE TYPE 6 | IMAGE PROCESSING DEVICE ▼ ~161f |
| ⋮ | ⋮ |
| MODULE TYPE N | ▼ ~161n |

161m

SET   RETURN   NEXT

# FIG. 10

162

DETECTION
TIME

DETECTION
SENSITIVITY

| SELECT | RETURN | NEXT |

# FIG. 11

163

DETECTION
SENSITIVITY

PRICE

| SELECT | RETURN | NEXT |

# FIG. 12

EP 1 879 121 A2

|  | HIGH-LEVEL MODEL | MIDDLE-LEVEL MODEL | LOW-LEVEL MODEL | OPTION | |
|---|---|---|---|---|---|
| LIGHT SOURCE | DUV | UV BROAD | UV BROAD | UV EMISSION LINE | |
| OPTICAL SYSTEM | DUV COMPATIBLE | UV COMPATIBLE | UV COMPATIBLE | | |
| OBJECT LENS | 10x(DUV2) | 10 x (NA0.8) | 10 x (NA0.6) | 10 x (DUV1) | |
| IMAGE SENSOR | TDI(DUV2) | TDI(20STEPS) | TDI(10STEPS) | TDI(DUV2) | |
| STAGE | LINEAR DRIVE | LINEAR DRIVE | LINEAR DRIVE | | |
| IMAGE PROCESSING DEVICE | PIPELINE | PIPELINE | PIPELINE | PARALLEL PROCESSING | PROGRAMMABLE |
| OVERALL CONTROL DEVICE | — | — | — | | |
| DETECTION SENSITIVITY | | | | | |
| DETECTION TIME | | | | | |
| DEVICE COST PRICE | | | | | |
| DEVICE PRICE | | | | | |

164

# FIG. 13

165

# FIG. 14

```
                    ┌─────────────┐
                    │   START     │
                    └──────┬──────┘
                           │
         ┌─────────────────▼─────────────────┐
         │ DISPLAY ATTRIBUTE INFORMATION     │── S170
         │ INPUT SCREEN AND RECEIVE INPUT    │
         │ OF NECESSARY INFORMATION          │
         └─────────────────┬─────────────────┘
                           │
              NO           ▼              S171
          ◄────────◇ IS STORE BUTTON ◇
                    ◇    CLICKED?    ◇
                           │
                          YES
                           ▼              S172
                  ◇ DO ALL INPUT FIELDS ◇      NO
                  ◇ HAVE INFORMATION INPUT ◇──────►
                  ◇     THERETO?        ◇
                           │
                          YES
                           ▼
         ┌─────────────────────────────────┐
         │ STORE INFORMATION IN ATTRIBUTE  │── S173
         │ TABLE STORAGE FIELD             │
         └─────────────────┬───────────────┘
                           │
                           ▼          S174
                  ◇ IS INPUT ENDED? ◇      NO
                           │
                          YES
                           ▼
                    ┌─────────────┐
                    │    END      │
                    └─────────────┘
```

# FIG. 15

START

DISPLAY MODULE INFORMATION INPUT SCREEN AND RECEIVE INPUT OF NECESSARY INFORMATION — S180

IS SET BUTTON CLICKED? — S181

NO

YES

CREATE COMBINATION OF MODULES AND SPECIFY CANDIDATE PRODUCT — S182

CALCULATE PRODUCT INDICES OF SPECIFIED CANDIDATE PRODUCT — S183

DISPLAY CANDIDATE PRODUCT(S) — S184

IS THERE DATA OF COMPETITOR'S PRODUCT? — S185

NO

YES

DISPLAY COMPETITOR'S PRODUCT — S186

S187 — IS CANDIDATE PRODUCT SELECTED?

NO

YES

S188 — IS DISPLAY INSTRUCTION GIVEN?

NO

YES

DISPLAY MODULE CONFIGURATION OF SELECTED CANDIDATE PRODUCT — S189

END

# FIG. 16

START

DISPLAY MODULE INFORMATION INPUT SCREEN
AND RECEIVE INPUT OF NECESSARY INFORMATION — S190

IS SET BUTTON CLICKED?  NO

YES

CREATE COMBINATION OF MODULES AND
SPECIFY CANDIDATE PRODUCT — S192

CALCULATE PRODUCT INDICES OF SPECIFIED
CANDIDATE PRODUCT — S193

DISPLAY CANDIDATE PRODUCT — S194

S195
IS THERE DATA OF
COMPETITOR'S PRODUCT?  NO

YES

DISPLAY COMPETITOR'S PRODUCT — S196

S197
IIS POSITION DESIGNATED?  NO

YES

S198
IS EXECUTION
INSTRUCTION GIVEN?  NO

YES

SPECIFY MODULE TYPE AND PARAMETER — S199

DISPLAY SPECIFIED MODULE TYPE
AND PARAMETER — S200

END

# FIG. 17

```
                    ( START )
                        │
                        ▼
        ┌──────────────────────────────────────┐
        │ DISPLAY MODULE INFORMATION INPUT SCREEN│──S210
        │ AND RECEIVE INPUT OF NECESSARY INFORMATION│
        └──────────────────────────────────────┘
                        │
          ┌─────────────┤
          │             ▼
        ┌─┘      ╱──────────────────╲        S211
     NO │       ╱  IS SET BUTTON CLICKED? ╲
        └──────╲                          ╱
                ╲────────────────────────╱
                        │ YES
                        ▼
        ┌──────────────────────────────────────┐
        │ CREATE COMBINATION OF MODULES AND     │──S212
        │ SPECIFY CANDIDATE PRODUCT             │
        └──────────────────────────────────────┘
                        │
                        ▼
        ┌──────────────────────────────────────┐
        │ CALCULATE PRODUCT INDICES OF SPECIFIED│──S213
        │ CANDIDATE PRODUCT                     │
        └──────────────────────────────────────┘
                        │
                        ▼
        ┌──────────────────────────────────────┐
        │ DISPLAY CANDIDATE PRODUCT             │──S214
        └──────────────────────────────────────┘
                        │
                        ▼                      S215
          ╱──────────────────────────╲
    NO   ╱      IS THERE DATA OF       ╲
 ┌──────╲     COMPETITOR'S PRODUCT?    ╱
 │       ╲──────────────────────────╱
 │                    │ YES
 │                    ▼
 │      ┌──────────────────────────────────────┐
 │      │ DISPLAY COMPETITOR'S PRODUCT          │──S216
 │      └──────────────────────────────────────┘
 │                    │
 └────────────────────┤
                      ▼
 S217    ╱──────────────────────────╲      NO
        ╱      IS FIRST POINT INPUT?  ╲────────┐
        ╲                            ╱         │
         ╲──────────────────────────╱          │
                    │ YES                       │
                    ▼◄──────────────────────────┘
 S218    ╱──────────────────────────╲      NO
        ╱     IS SECOND POINT INPUT?  ╲────────┐
        ╲                            ╱         │
         ╲──────────────────────────╱          │
                    │ YES ◄────────────────────┘
                    ▼
        ┌──────────────────────────────────────┐
        │ RETRIEVE OPTIMAL CANDIDATE PRODUCT    │──S219
        │ FOR EACH INCLINATION OF EFFECT LINE   │
        └──────────────────────────────────────┘
                        │
                        ▼
        ┌──────────────────────────────────────┐
        │ DISPLAY RETRIEVED CANDIDATE PRODUCT   │──S220
        └──────────────────────────────────────┘
                        │
                        ▼
                    ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003099586 A